# EUROPEAN PATENT APPLICATION

(11) **EP 4 413 856 A1**
(43) Date of publication of application: **14.08.2024**
(21) Application number: 24156390.7
(22) Date of filing: 07.02.2024
(51) Int. Cl.: A01M 7/00

(54) **AGRICULTURAL DEVICE AND VEHICLE PROVIDED WITH AN AGRICULTURAL DEVICE**

(30) Priority: 07.02.2023 DE 102023102878
(71) Applicant: Bomech B.V., 7665 SH Albergen (NL)
(72) Inventor: SCHURINK, Gerard Johannes, 7665 SH ALBERGEN (NL); HOEK, Johannes Bernardus Maria, 7665 SH ALBERGEN (NL); MAATHUIS, Jolien Maria Anna, 7665 SH ALBERGEN (NL)
(74) Representative: Patentwerk B.V.

(57) **Abstract**

The present invention relates to an agricultural device, in particular for spreading a movable medium over agricultural soil, comprising a support frame having a front side and a rear side, wherein the support frame is provided with at least one coupling element for coupling the support frame to a vehicle, such as a tractor, at least one spreader arm directly or indirectly pivotally connected to the support frame, which spreader arm is movable between an extended position, wherein the at least one spreader arm extends at least partially, preferably substantially, transversely to the driving direction of the vehicle, and a transport position, wherein the at least one spreader arm extends substantially in the driving direction of the vehicle. The invention also relates to a method for use of an agricultural device.

## Description

The present invention relates to an agricultural device for spreading a movable medium over agricultural soil. The invention also relates to a vehicle provided with such an agricultural device and a method for use of an agricultural device.

Such agricultural devices are generally known, for example for spreading liquid manure over (agricultural) soil, as a spraying apparatus for atomizing liquid crop protection agents or as a sowing apparatus for seeding soil. In order to cause the operations to run as effectively as possible, such agricultural devices are provided with one or more cultivating arms which may be oriented so that they extend in their working position transversely to the driving direction of a carrying vehicle to be able to cultivate a strip of (agricultural) soil as wide as possible in a single cultivating pass. In order to be able to also move the agricultural device over (public) road, the cultivating arm(s) is/are designed such that it/they may be extended to a maximum width virtually corresponding to the width of the carrying vehicle. This may, for example, be a requirement of the national traffic laws. With vehicles belonging to the prior art, the arms usually extend on both sides of the carrying vehicle. The vehicle is usually provided with a tank, the arms extending on both sides of the tank, but it is also possible that the pumpable medium is supplied from a separate medium buffer located at a short distance from the carrying vehicle in the form of an external mobile or stationary supply system. The spreader arms need to be able to be folded compactly but desirably have a largest possible working width in the extended working condition. Here, it needs to be considered that, in extended working condition, the arms may be loaded heavily by, among other things, brusquely moving the carrying vehicle, the presence of pumpable medium in the conduits (increasing the weight to be carried) and local height differences in the soil which desirably should be followed by the spreader arms.

Due to the high weight of the spreader arms, they are exposed to great forces. In particular when accelerating and slowing down a vehicle the agricultural device is connected to, the inertia of the agricultural device may constitute a problem. Accelerating may also be referred to as speeding up, and slowing down also as decelerating. When accelerating, as a result of inertia, the spreader arm may pivot, particularly in rearward direction. A same movement may occur in the forward direction as a result of slowing down, for example an emergency stop. This undesired movement may damage components of the agricultural device since they are possibly not designed for such forces.

A possible solution to obviate this problem is to place a rigid connection between the spreader arm and the vehicle. This rigid connection may absorb the inertial forces of the spreader arm, so that the spreader arm pivots less as a result of the acceleration of the vehicle. However, this causes many forces to be transmitted to the vehicle, so that the vehicle needs to absorb the forces. This may cause accelerated occurrence of wear of components of the vehicle, which is not desirable. Moreover, it causes such a rigid connection to need to be mounted manually after bringing the spreader arm into the working position. Such a solution is therefore very laborious.

It is therefore an object of the present invention to absorb and/or reduce the inertial forces of the spreader arm in a simpler and more durable manner.

It is a second object of the present invention to increase the stability of the agricultural device.

To this end, the present invention provides an agricultural device, in particular for spreading a movable medium over agricultural soil, comprising a support frame having a front side and a rear side, the support frame being provided with at least one coupling element for coupling the support frame to a vehicle, such as a tractor, at least one spreader arm directly or indirectly pivotally connected to the support frame, which spreader arm is preferably movable between an extended position, the at least one spreader arm extending at least partially, preferably substantially, transversely to the driving direction of the vehicle, and a transport position, the at least one spreader arm extending substantially in the driving direction of the vehicle, the support frame comprising at least one frame part, which frame part extends from a front side and/or a rear side of the support frame, at least partially in the driving direction of the vehicle, and at least one, preferably tension-loadable, connecting element, on the one hand, engaging with or being connected or connectable to the at least one spreader arm and, on the other hand, engaging with or being connected or connectable to a respective front or rear connecting point of the frame part, which connecting point is spaced apart from the support frame.

Due to the at least one connecting element, the present invention is capable of at least partially reducing or obviating the movement of the spreader arm. In any case during accelerating and/or decelerating of the vehicle. This contributes to the stability of the agricultural device since the spreader arm moves undesirably to a lesser extent. Because the at least one connecting element extends between the connecting point and the spreader arm, the forces resulting from the inertia are transmitted to the support frame, for example through the said frame part. This is particularly advantageous since a force transmission to a vehicle to which the support frame is coupled is not desirable. In this manner, a simpler structure may be provided. The at least one connecting element may be a tension-loadable connecting element, preferably an only and/or exclusively tension-loadable connecting element. However, it is also conceivable that the connecting element is a tension and pressure-loadable connecting element. Depending on the placement of the at least one connecting element, that is to say, depending on the direction in which the at least one frame part extends from the support frame, and the type of load which may be transmitted by the connecting element, it is possible to prevent either a forward rotation or a rearward rotation of the spreader arm. Here, the forward rotation of the spreader arm may be seen as a rotation resulting from slowing down; a rearward rotation of the spreader arm may be seen as a rotation resulting from an acceleration. The wording front and rear, front side and rear side, may, in this document, be understood to mean front and rear side of the support frame, viewed from a driving direction of a vehicle coupled to the support frame. Preferably, the at least one connecting element is adapted for transmitting an inertial force from the spreader arm to the support frame, in particular during accelerating and/or decelerating of the vehicle. By transmitting such a force to the support frame, the vehicle or a frame of the vehicle experiences no hindrance and/or wear from this inertia force.

Preferably, the spreader arm is provided with at least one, preferably a plurality of pumpable medium outputs and a medium conduit extending from the support frame along the spreader arm to the pumpable medium outlets. Connecting element preferably exclusively, or only, tension loadable.

According to a variant embodiment of the present invention, the at least one frame part extends from the front side and the rear side of the support frame, a front connecting element, on the one hand, engaging with the spreader arm and, on the other hand, at a distance from the front side of the support frame, with the front connecting point of the frame part, and a rear connecting element, on the one hand, engaging with the spreader arm and, on the other hand, at a distance from the rear side of the support frame, with the rear connecting point of the frame part. By using both a front and a rear connecting element, the inertia of the spreader arm may be absorbed better. To this end, for example, the front element may be adapted for absorbing a rearward rotation of the spreader arm. Preferably, the rear connecting element is adapted for absorbing a forward rotation of the spreader arm. It is optionally conceivable that this is the other way around, the front connecting element absorbing a forward rotation of the spreader arm. This depends on the type of connecting element used. Preferably, the front and rear connecting elements are each adapted for absorbing and/or transmitting one movement of the spreader arm. Thus, the design of the connecting element may be tailored to the specific movement. By receiving both a front and a rear connecting element, the overall stability of the spreader arm is increased further, which is advantageous for the cultivation of the agricultural soil with the agricultural device. The front and rear connecting elements may then also be designed as a substantially form-retaining rod. It is of course also conceivable that the frame part is formed from two separate frame parts, such as a front frame part extending from the front side of the support frame, and a rear frame part extending from the rear side of the support frame. The frame part(s) may also be constructed as such from a plurality of sub-parts, such that some sub-parts together form a frame part. Furthermore, the frame part may be an integral part of the support frame.

According to a variant embodiment of the present invention, the front connecting element engages with a front side of the spreader arm and/or the rear connecting element engages with a rear side of the spreader arm. This configuration is simple to realize, since the connecting point on the support frame and the engaging point on the spreader arm are located on the same side. Thus, the connecting element may be placed more simply, without getting in the way of other components.

Preferably, the engaging points of the front and rear connecting element on the spreader arm are spaced apart from each other, preferably at least in the longitudinal direction of the spreader arm. This contributes to forming a half-timbered structure, at least in the extended position of the spreader arm. It is advantageous if the engaging points of the connecting element on the spreader arm are spaced apart from one another. Thus, it may be prevented that all forces act on the same point. Preferably, the engaging point on the rear side of the spreader arm is located at a larger distance from the support frame than the engaging point on the front side of the spreader arm. Preferably, the engaging point of the connecting element is located on the rear side of the spreader arm on an outer part of the spreader arm.

Preferably, the at least one spreader arm comprises at least an inner spreader arm part and an outer spreader arm part provided movably relative thereto, the at least one connecting element engaging a part of the first or inner spreader arm part. The spreader arm parts may mutually move and/or rotate relative to one another, in order to adjust the working width of the agricultural device. If the spreader arm comprises a plurality of mutually movable parts, the engaging point is preferably located on an outer part of the inner spreader arm part. Preferably, the engaging point on the spreader arm is located at a distance from the connecting point, said distance being in the range of 300 cm to 1200 cm, preferably between 450 cm and 900 cm. The larger the distance, the more stable the whole is. Within this range, it has been found that the connecting element offers sufficient stability for the agricultural device. Within these distances, it is possible to properly absorb the forward and/or rearward rotation of the spreader arm.

It is conceivable that at least one connecting element is formed by a rope and/or cable. Preferably, the rope and/or cable is exclusively or only tension-loadable. According to a variant embodiment, the connecting element is exclusively or only connected to the connecting point on the support frame and the engaging point on the spreader arm. Here, the term exclusively or only should be understood to mean that the connecting point serves as a single substantial transmitter of forces. That is to say that forces substantially remain only within the support frame and the spreader arm connected thereto, and are therefore not transmitted to the vehicle. By exclusively having the connecting element engage with the support frame and the spreader arm, it may be realized that no forces are transmitted to, for example, the vehicle or a frame of the vehicle. A rope and/or cable is advantageous since such connecting elements may bear a high tensile load, but have a low weight. Thus, the weight of the spreader arm may be kept lower, which in turn contributes to reducing forces and increasing stability.

Preferably, the at least one connecting element is, directly or indirectly, via at least one resilient element, preferably a hydraulic accumulator, more preferably a hydraulic cylinder, connected to the front and/or rear connecting point of the frame part. Preferably, the at least one resilient element is adapted to provide a resilient action from a predetermined threshold value of load. If use is made of a hydraulic accumulator, it is conceivable that this hydraulic accumulator is, directly or indirectly, connected to a cylinder. If a hydraulic cylinder is referred to, this may also be seen as a cylinder connected to an external and/or separate hydraulic accumulator, or connected to a liquid connection providing a same action. Such a hydraulic connector may also be realized if a front cylinder and a rear cylinder are connected to each other by means of conduits. Thus, a front cylinder springs a rear cylinder. That is to say that, below a predetermined load on the resilient element, the resilient element has no resilient action, and that, when the said threshold value is exceeded, the resilient element obtains a resilient action. More preferably, the predetermined threshold value is a settable threshold value. Thus, it may be realized that, only with a predetermined load, a resilient action occurs. This offers the advantage that, with a relatively low load, the spreader arm may be kept in place relatively stably, and, when a relatively high load is reached, the spreader arm may spring somewhat. This also limits the load on the connecting element. Here, the hydraulic accumulator is preferably a settable hydraulic accumulator.

Preferably wherein a working pressure of the hydraulic accumulator is settable, preferably between a range of 30 bar and 300 bar, preferably between 60 bar and 250 bar. Here, said working pressure may be seen as the said threshold value. If the load on the hydraulic accumulator is higher than the set working pressure, the hydraulic accumulator obtains a resilient action.

If applicable, both the front connecting element and the rear connecting element are, via a resilient element, preferably a hydraulic accumulator, connected to the support frame. The hydraulic accumulator connected, directly or indirectly, to the connecting element is not the same as the hydraulic accumulator provided between the support frame and the spreader arm. Where, in the present invention, a hydraulic accumulator is referred to, the resilient element may also be referred to.

Preferably, the at least one connecting element is connected to the front and/or rear connecting point via a coupling frame. Preferably wherein the coupling frame is rotatably connected to the front and/or the rear connecting point of the frame part. The coupling frame allows the at least one connecting element to engage with the frame part of the support frame. It is particularly advantageous if the coupling frame is rotatably connected to the frame part. Thus, the at least one connecting element may rotate relative to the support frame. This helps with moving the spreader arm in and out of the extended position, in particular without needing to remove the connecting element.

In a variant embodiment, at least one hydraulic accumulator, preferably a hydraulic cylinder, on the one hand, engages directly or indirectly, preferably rotatably, with the coupling frame and wherein the at least one hydraulic accumulator, on the other hand, engages, preferably rotatably, with the support frame. Preferably, a cylinder is then rotatably connected to, on the one hand, the coupling frame and, on the other hand, the support frame, said cylinder preferably being coupled, for example to a hydraulic cylinder. This may, for example, be adapted by including a supply and discharge connection for supplying and discharging hydraulic oil on the cylinder. Such a mounting of a hydraulic accumulator makes it possible to provide the coupling frame with a resilient property from a predetermined threshold value. This resilience may, for example, be formed in allowing a rotation of the coupling frame about the connecting point above the threshold value. Preferably, the at least one hydraulic accumulator is rotatably connected to the support frame, the hydraulic accumulator being rotatable about a vertical axis. If both the front and rear hydraulic accumulator are present, they are preferably mounted to be rotatable about the same vertical axis on the support frame.

According to a variant embodiment of the present invention, the at least one connecting element engages with the coupling frame at a distance from the front and/or rear connecting point, and where preferably the at least one hydraulic accumulator engages at a distance from the front and/or rear connecting point and/or the said point. Preferably, the engaging point of the at least one hydraulic accumulator with the coupling frame, the at least one connecting point, and the engaging point of the at least one connecting element with the coupling frame are located at a mutual distance from one another on the coupling frame. Preferably, the connecting element and the hydraulic accumulator engage with the coupling frame on both sides of the engaging point of the coupling frame with the connecting point. In this manner, the coupling frame may constitute a yoke that may advantageously transmit a play of forces. This is an advantageous manner to transmit the inertial force towards the support frame. Preferably, the yoke is rotatably connected to the at least one front or rear connecting point. More preferably, the yoke is rotatable in at least a horizontal plane. This causes at least a forward rotation and/or a rearward rotation of the spreader arm to be absorbed properly. An above-described yoke may be placed both on the front side and on the rear side of the frame. Preferably, the rear yoke is rotatably connected to the rear connecting point, a rear hydraulic accumulator engaging with the support frame and with the yoke, and the rear connecting element also engaging with the rear yoke.

According to a variant embodiment, the support frame comprises two pivotally connected spreader arms located on opposite sides of the support frame, said spreader arms each preferably comprising an inner and an outer spreader arm part. Each of these spreader arms may be provided with all features as discussed hereinabove. In an advantageous variant embodiment, the agricultural device comprises a total of two front yokes and two rear yokes. Each of the front yokes is connected to a front connecting point, which front connecting points are spaced apart in the width direction. Preferably, a hydraulic accumulator and a front connecting element engage with each of the front yokes. Here, the front connecting elements each engage with one of the spreader arms. Likewise, each of the rear yokes is connected to a rear connecting point, which rear connecting points are spaced apart in the width direction. Preferably, a hydraulic accumulator and a rear connecting element engage with each of the rear yokes. Here, the front connecting elements each engage with one of the spreader arms.

Preferably, the at least one connecting element, in the extended position of the spreader arm, is at an angle to the longitudinal direction of the spreader arm and/or the at least one connecting element, in the transport position, runs substantially parallel to at least a part of, preferably the whole of, the spreader arm. The angle the at least one connecting element makes with respect to the spreader arm helps to transmit the forces. The larger the angle, the more the connecting element is tension-loaded. Since the connecting element is in the transport position of the spreader arm, the spreader arm may become relatively compact. The connecting element therefore does not cantilever much with respect to the spreader arm in the transport position. This causes it to be simple to transport without the width of the vehicle to which it is coupled becoming too great.

According to a variant embodiment, the connecting point of the frame part is located at a distance of between 20 cm and 200 cm, preferably between 30 cm and 150 cm, more preferably between 40 cm and 120 cm, from the support frame. It may thus be realized that, by means of a tension and/or pressure load, the at least one connecting element may transmit and/or receive the forces and/or movement of the spreader arm in the support frame in a controlled manner.

The invention further relates to a vehicle provided with an agricultural device according to one of the variant embodiments of the present invention, the vehicle preferably being provided with a tank for holding a pumpable medium, for example a liquid, liquid manure, seedlings and/or spreading material, and that the support frame of the agricultural device is coupled to the rear side of the tank on the vehicle, the at least one connecting element being substantially free from a coupling to the tank. The same advantages apply to the vehicle as described with respect to the agricultural device according to this invention.

The present invention also relates to a method for use of an agricultural device placed on a vehicle, preferably an agricultural device according to any one of clams 1-16, comprising the steps of:
a) providing a support frame, and coupling the support frame to a vehicle, preferably a rear side of the vehicle; b) unfolding at least one spreader arm from a transport position, substantially parallel to the driving direction of the vehicle, to an extended position, at least partially, preferably substantially, transversely to the driving direction of the vehicle; c) accelerating or decelerating the vehicle from a particular momentaneous speed; d) during and/or after an acceleration and/or deceleration of the vehicle in step c), preventing a movement of the spreader arm resulting from the inertia of the at least one spreader arm; the inertia of the at least one spreader arm in step c) being at least partially absorbed by a connecting element, and forces being substantially wholly transmitted to the support frame. With regard to the method according to the present invention, the same advantages apply with regard to the agricultural device as well as the vehicle according to this invention.

The present invention will hereinafter be discussed in more detail with reference to the following figures, in which:
- Figure 1 shows a perspective view of the agricultural device according to a variant embodiment;
- Figure 2 shows a plan view of a part of the agricultural device according to the invention;
- Figure 3 shows a perspective view of an aspect of the present invention; and
- Figure 4 shows a schematic plan view of a variant embodiment of the agricultural device.

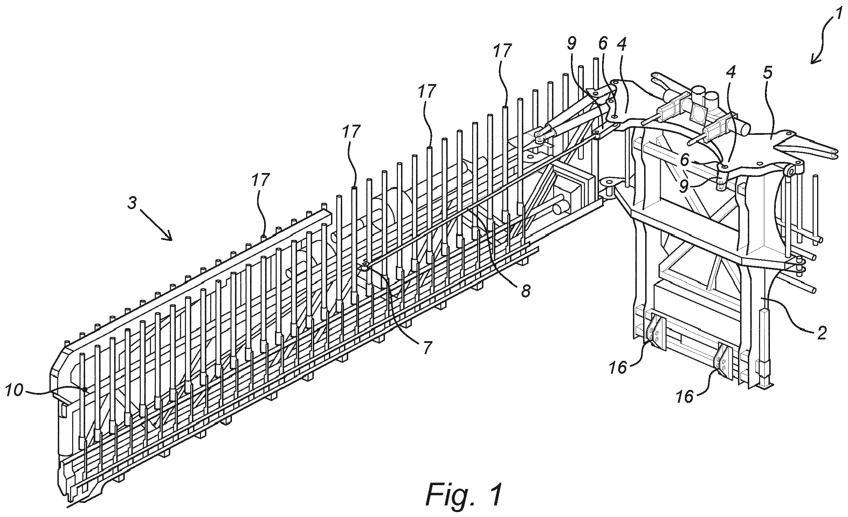

Figure 1 shows a perspective view of an agricultural device 1 according to a variant embodiment of the present invention. Herein a support frame 2 is shown, which support frame comprises coupling elements 16 for coupling the support frame 2 to the vehicle (not shown) in this variant embodiment. At least one spreader arm 3 is rotatably connected to the support frame 2. On this spreader arm, a plurality of pumpable medium outlets 17 are provided for spreading a pumpable medium over agricultural soil. In this figure, the spreader arm 3 is shown in a transport position, the at least one spreader arm 3 being substantially parallel to a vehicle (if coupled to the support frame). The spreader arm 3 is movably mounted on the support frame 2 and may be also be brought into an extended position extending substantially perpendicular to the driving direction. The support frame 2 comprises at least one frame part 4, 5 extending from the front side and/or rear side of the support frame 2. In this variant embodiment, the support frame 2 is provided with a front frame part 5 and a rear frame part 4. The front frame part 5 extends from a front side of the support frame 2 in the driving direction. The rear frame part 4 extends in a direction facing away therefrom from the rear side of the support frame. A connecting element 8, shown indicatively here, extends between the frame part 4, 5 and the spreader arm 3. Here, the connecting element 8 is coupled to a connecting point 6 on the frame part 4, 5 via a yoke 9. Here, the yoke 9 rotatably engages with the connecting point 6 on the frame part 4, 5 and the connecting element is connected to the yoke 9. The connecting element 8 is adapted to prevent, absorb or transmit a rearward or forward rotation of the spreader arm 3 to the support frame 2. In the variant shown, the spreader arm 3 comprises a front engaging point 7, to which a front connecting element 8 is connected, and a rear engaging point 10. The rear engaging point may be connected to a rear connecting element. In this figure, the rear connecting element is not shown for graphical reasons, but may be designed to be similar to the front connecting element 8. Such a connecting element 8 may contribute to both the stability of the spreader arm 3, particularly in an extended position, and at the same time to the reduction of the load a vehicle may experience. The connecting element 8 ensures that forces are not passed on and/or transmitted to the vehicle to which the support frame 2 is coupled, but that the forces are only passed on to the support frame 2 and absorbed there.

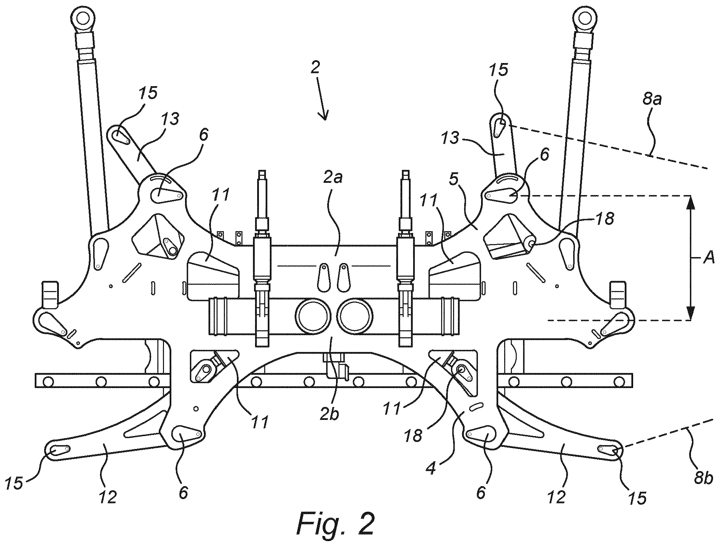

Figure 2 shows a plan view of a part of the agricultural device 1. Herein, the support frame 2 is shown in more detail. A front side 2a and a rear side 2b of the support frame 2 are indicated herein. The front frame part 5 extends from the front side 2a of the support frame 2. The front frame part 5 comprises a connecting point 6 located at a distance A from a centerline of the support frame 2. A front yoke 13 is provided rotatably engagingly with the connecting point 6. The front yoke 13 comprises a first mounting point 15, which mounting point 15 is spaced apart from the connecting point 6. The front yoke 13 is further connected to a hydraulic accumulator 11. In this non-limiting variant embodiment, a cylinder 11 is received, which is connected to a hydraulic accumulator, which together form a hydraulic cylinder, which will hereinafter be referred to as a hydraulic accumulator 11. The hydraulic accumulator 11, at least the cylinder connected to the accumulator, also engages with an engaging point 18 located on the front yoke 13. In this figure, on the right side, a front connecting element 8a is shown only schematically, which is connected to the first mounting point 15 on the front yoke 13. From the first mounting point 15, such a connecting element preferably extends to a front side of the spreader arm. If a spreader arm (not shown) coupled to the support frame 2 is inclined to rotate rearwards as a result of an acceleration of the vehicle, the front connecting element 8a will at least be tension-loaded. The hydraulic accumulator 11 is set to a particular working pressure. Because the front connecting element 8a is tension-loaded, a force is exerted on the front yoke 13. Since the hydraulic accumulator is also connected to this yoke, force is transmitted through the front yoke 13. If the acceleration of the vehicle is high, and the spreader arm transmits a large inertial force through the front connecting element 8a, it may be that the force on the hydraulic accumulator is greater than the set working pressure. If this is exceeded, it provides a somewhat resilient action. This resilient action is expressed in the variant embodiment shown by allowing a rotation of the front yoke 13 about the connecting point 6 so that, when the accumulator pressure is exceeded, the spreader arm will only make a small rearward rotation. In addition to the front frame part 5, the support frame 2 also comprises a rear frame part 4. A rear yoke 12 is also rotatably mounted on this rear frame part 4 in the same manner. The rear yoke 12 is rotatable about the rear connecting point 6. A rear connecting element 8b engages with a first mounting point 15 on the rear yoke 12. From the first mounting point 15, such a rear connecting element 8b preferably extends to an engaging point on a rear side of the spreader arm. If a spreader arm (not shown) coupled to the support frame 2 is inclined to rotate forwards as a result of a slowing down of the vehicle, the rear connecting element 8b will at least be tension-loaded. The hydraulic accumulator 11 is set to a particular working pressure. Because the rear connecting element 8b is tension-loaded, a force is exerted on the rear yoke 12. Since the hydraulic accumulator is also connected to this yoke 12, force is transmitted through the rear yoke 12. If the slowing down of the vehicle is great, and the spreader arm transmits a large inertial force through the rear connecting element 8b, it may be that the force on the hydraulic accumulator is greater than the set working pressure. If this is exceeded, it provides a somewhat resilient action. This resilient action is expressed in the variant embodiment shown by allowing a rotation of the rear yoke 12 about the connecting point 6 so that, when the accumulator pressure is exceeded, the spreader arm will only make a small forward rotation. In this variant embodiment, a separate hydraulic accumulator 11, at least a separate cylinder, connected to a hydraulic accumulator, for example with a supply and discharge conduit for the hydraulic oil, is present for both the front yoke 13 and the rear yoke 12. Thus, the front connecting element 8a and the rear connecting element 8b work completely independently when transmitting forces to the support frame 2.

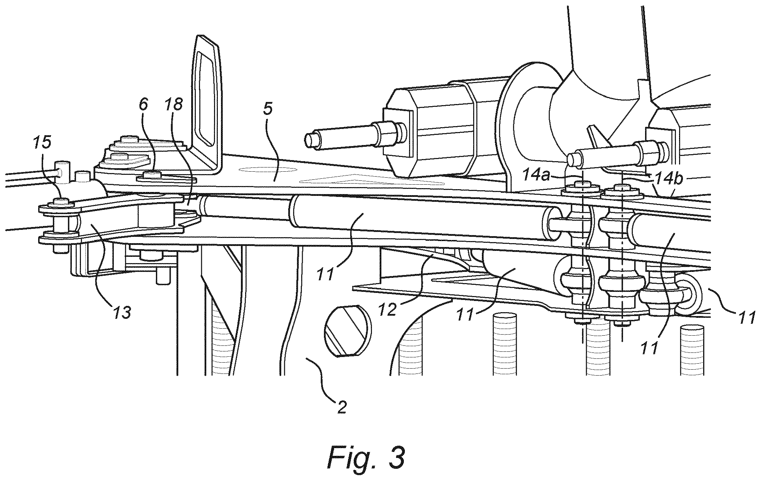

Figure 3 shows a perspective view of a part of the support frame 2. Here, a front frame part 4 is shown, to which a front yoke 13 is rotatably connected. The rear yoke 13 is also rotatable about the rear connecting point 6. The first mounting point 15 on the rear yoke, the engaging point of a rear connecting element (not shown), is at a distance from the connecting point 6. Also at a distance therefrom, a rear hydraulic accumulator 11, at least the cylinder connected to the hydraulic accumulator, engages with a second mounting point 18 of the front yoke 13. Another end of the said rear hydraulic accumulator 11, at least the cylinder engaging with the said hydraulic accumulator, engages with the support frame 2. Here, the rear hydraulic accumulator 11, at least the cylinder thereof, engages, in any case in the horizontal plane, rotatably with both the front yoke 13 and the support frame 2. On the support frame 2, the hydraulic accumulator 11 is rotatable about a vertical axis 14a, about which axis a front hydraulic accumulator 11 also rotatably engages. A second vertical axis 14b is located right next to this vertical axis 14a, about which vertical axis 14b two hydraulic accumulators also engage, which are connected to a second rear yoke 12 and a second front yoke 13.

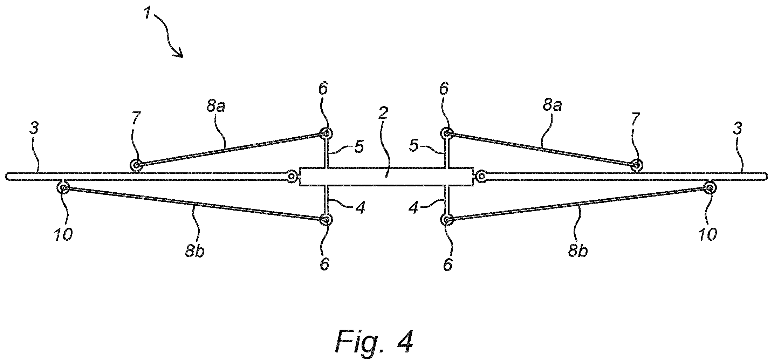

Figure 4 shows a schematic view of an agricultural device 1 according to a variant embodiment of the invention. Here, the support frame 2 is shown centrally. A spreader arm 3 is rotatably connected to both the left side and the right side of the support frame 2. In this view, the spreader arms 3 are shown in the extended state, wherein they extend at least partially, and in particular substantially transversely to the driving direction of the vehicle. Here, the support frame 2, schematically shown, comprises front frame parts 5 and rear frame parts 4. Although two separate front frame parts 5 and two separate rear frame parts 4 are shown here, it is also conceivable that one frame part extends both forwards and rearwards, or other variants thereof. Two front connecting points 6 and two rear connecting points 6 are located at a distance from the support frame 2. Two front connecting elements 8a engage with the front connecting points 6. Although it is shown here that the front connecting elements 8a engage with the front connecting points 6, it is also conceivable that these connecting elements 8a engage with a front yoke provided rotatably with the front connecting point 6, in accordance with alternative embodiments described.

Two rear connecting elements 8b engage with the rear frame parts 4, in particular the rear connecting points 6. In this embodiment, the front connecting elements 8a are connected to the front connecting points 6 on the one hand, and engaging points 7 on a front side of the spreader arms 3 on the other hand. The rear connecting elements 8b engage with the rear connecting points 6 on the one hand, and with the engaging points 10 on a rear side of the spreader arms 3 on the other hand. The engaging points 7 on the front side of the spreader arms 3 and the engaging points 10 on the rear side of the spreader arms are spaced apart from one another. Preferably, the front connecting elements 8a are adapted to at least partially prevent and/or reduce a rearward rotation of the spreader arms 3. The rear connecting elements 8b are preferably adapted to prevent and/or reduce a forward rotation of the spreader arms 3. This is advantageous since, in this manner, the spreader arms 3 may be kept more stable during use of the agricultural device 1. In particular, this is advantageous since the forces are not transmitted to the vehicle to which the support frame 2 may be coupled. Thus, the vehicle remains substantially unloaded by the inertial forces of the spreader arms resulting from an acceleration or deceleration of the vehicle.

The above-described inventive concepts are illustrated by various illustrative embodiments. It is conceivable that individual inventive concepts, including inventive details, may be used without also using other details of the example described. It is not necessary to elaborate on all conceivable combinations of the above-described inventive concepts, since a skilled person will understand that many inventive concepts may be combined (again) to come to a specific application and/or alternative embodiment.

The ordinal numbers used in this document, such as 'first', 'second' and 'third', are only used for purposes of identification. The use of expressions such as a "second" component therefore does not necessarily require the simultaneous presence of a "first" component.

## Claims

1. Agricultural device, in particular for spreading a movable medium over agricultural soil, comprising:
- a support frame having a front side and a rear side, wherein the support frame is provided with at least one coupling element for coupling the support frame to a vehicle, such as a tractor;
- at least one spreader arm directly or indirectly pivotally connected to the support frame, which spreader arm is movable between:
o an extended position, wherein the at least one spreader arm extends at least partially, preferably substantially, transversely to the driving direction of the vehicle; and
∘ a transport position, wherein the at least one spreader arm extends substantially in the driving direction of the vehicle,
wherein the support frame comprises at least one frame part, which frame part extends from a front side and/or rear side of the support frame, and
wherein at least one, preferably tension-loadable, connecting element engages with the at least one spreader arm on the one hand and with a respective front or rear connecting point of the frame part on the other hand, which connecting point is spaced apart from the support frame.

2. Agricultural device according to claim 1, wherein the at least one frame part extends from the front side and the rear side of the support frame, wherein a front connecting element, on the one hand, engages with the spreader arm and, on the other hand, at a distance from the front side of the support frame with the front connecting point of the frame part, and wherein a rear connecting element, on the one hand, engages with the spreader arm and, on the other hand, at a distance from the rear side of the support frame with the rear connecting point of the frame part.

3. Agricultural device according to any one of the preceding claims, wherein the front connecting element engages with a front side of the spreader arm and/or wherein the rear connecting element engages with a rear side of the spreader arm.

4. Agricultural device according to claim 2 or 3, wherein the engaging points of the front and rear connecting elements on the spreader arm are spaced apart from each other in the longitudinal direction of the spreader arm.

5. Agricultural device according to any one of the preceding claims, wherein at least one connecting element is formed by a rope and/or cable.

6. Agricultural device according to any one of the preceding claims, wherein the at least one connecting element is, directly or indirectly, via at least one resilient element, preferably a hydraulic accumulator, more preferably a hydraulic cylinder, connected to the front and/or rear connecting point of the frame part.

7. Agricultural device according to any one of the preceding claims, wherein the at least one connecting element is connected to the front and/or rear connecting point via a coupling frame.

8. Agricultural device according to claim 7, wherein the coupling frame is rotatably connected to the front and/or rear connecting point of the frame part, preferably wherein at least one hydraulic accumulator, preferably a hydraulic cylinder, engages, on the one hand, preferably rotatably, with the coupling frame and, on the other hand, engages, preferably rotatably, with the support frame.

9. Agricultural device according to any one of claims 7-8, wherein the at least one connecting element engages with the coupling frame at a distance from the front and/or rear connecting point, and wherein preferably the at least one hydraulic accumulator engages at a distance from the front and/or rear connecting point and/or said point.

10. Agricultural device according to any one of claims 6, 8, 9, wherein a working pressure of the hydraulic accumulator is adjustable, preferably between a range of 30 bar and 300 bar, preferably between 60 bar and 250 bar.

11. Agricultural device according to any one of the preceding claims, wherein the at least one spreader arm comprises at least an inner spreader arm part and an outer spreader arm part provided movably relative thereto, wherein the at least one connecting element engages with a part of the first or inner spreader arm part and/or wherein the support frame comprises two pivotally connected spreader arms located on opposite sides of the support frame, preferably wherein said spreader arms both comprise an inner and an outer spreader arm part.

12. Agricultural device according to any one of the preceding claims, wherein the at least one connecting element, in the extended position of the spreader arm, is at an angle to the longitudinal direction of the spreader arm and/or wherein the at least one connecting element, in the transport position, runs substantially parallel to at least a part of the spreader arm and/or wherein the at least one connecting element is adapted for transmitting an inertial force from the spreader arm to the support frame, in particular during acceleration and/or deceleration of the vehicle.

13. Agricultural device according to any one of the preceding claims, wherein the connecting point of the frame part is located at a distance of between 20 cm and 200 cm, preferably between 30 cm and 150 cm, more preferably between 40 cm and 120 cm, from the support frame.

14. Vehicle provided with an agricultural device according to any one of claims 1-13, preferably wherein the vehicle is provided with a tank for holding a pumpable medium, such as for example a liquid, liquid manure, seedlings and/or spreading material, and that the support frame of the agricultural device is coupled to the rear side of the tank on the vehicle, wherein the at least one connecting element is substantially free from a coupling to the tank.

15. Method for use of an agricultural device placed on a vehicle, preferably an agricultural device according to any one of clams 1-13, comprising the steps of:
a) providing a support frame, and coupling the support frame to a vehicle, preferably a rear side of the vehicle;
b) unfolding at least one spreader arm from a transport position, substantially parallel to the driving direction of the vehicle, to an extended position, at least partially, preferably substantially, transversely to the driving direction of the vehicle;
c) accelerating or decelerating the vehicle from a particular momentaneous speed;
d) during and/or after acceleration and/or deceleration of the vehicle in step c), preventing a movement of the spreader arm resulting from the inertia of the at least one spreader arm;
wherein the inertia of the at least one spreader arm in step c) is at least partially absorbed by a connecting element, and where forces are substantially wholly transmitted to the support frame.
